# EUROPEAN PATENT APPLICATION

(11) **EP 4 180 496 A1**
(43) Date of publication of application: **17.05.2023**
(21) Application number: 21838870.0
(22) Date of filing: 08.07.2021
(51) Int. Cl.: C09J 183/04, C09J 7/38

(54) **SILICONE-BASED ADHESIVE AND ADHESIVE TAPE**

(30) Priority: 10.07.2020 JP 2020119317
(71) Applicant: NITTO DENKO CORPORATION, Ibaraki-shi Osaka 567-8680 (JP)
(72) Inventor: WATANABE Yoshinori, Ibaraki-shi, Osaka 567-8680 (JP); SHIMIZU Izumi, Ibaraki-shi, Osaka 567-8680 (JP)
(74) Representative: Müller-Boré & Partner Patentanwälte PartG mbB
(86) International application number: PCT/JP2021/025859
(87) International publication number: WO 2022/009965

(57) **Abstract**

A provided adhesive is a silicone-based adhesive having an initial adhesive force of 0.2 to 3 N/20 mm and having an adhesive force of 4 N/20 mm or less after heating at 260°C for 30 minutes. A provided adhesive tape includes a cured layer of the above silicone-based adhesive. The adhesive tape may further include a substrate, and the cured layer may be provided on a surface of the substrate. The adhesive tape shows high adhesion performance and is capable of achieving low thermal dependence. The adhesive is capable of forming the adhesive tape.

## Description

### TECHNICAL FIELD

The present invention relates to a silicone-based adhesive and an adhesive tape.

### BACKGROUND ART

Adhesive tapes are sometimes processed into particular shapes and supplied and used as processed tape products. One example of processed tape products is a masking member that protects a portion of an object when the masking member is adhered to the object. The masking member is generally removed again after completion of protection of the portion. Depending on the object, the masking member may be exposed to a high-temperature treatment such as reflow soldering after the masking member is adhered to the object (high-temperature masking member). It is possible to supply a processed tape product disposed on a release liner with an adhesive layer of an adhesive tape interposed therebetween. In this case, the processed tape product is, for example, adhered to an object after peeled off from the release liner. Patent Literature 1 discloses an adhesive and an adhesive tape that can be included in high-temperature masking members.

### CITATION LIST

### Patent Literature

Patent Literature 1: JP 2000-160127 A

### SUMMARY OF INVENTION

### Technical Problem

It is important for adhesive tapes and processed tape products to ensure adhesion performance they exhibit on objects. In addition to this, adhesive tapes capable of maintaining properties such as adhesive force and the shapes as processed tape products even when objects to which the adhesive tapes or processed tape products formed thereof are adhered are exposed to a high temperature environment, for example, by subjecting the objects to a high-temperature treatment have been demanded in recent years. Such adhesive tapes are, in other words, adhesive tapes having low thermal dependence. However, it is difficult for conventional adhesive tapes to show high adhesion performance and have low thermal dependence.

The present invention aims to provide an adhesive tape capable of showing adhesion performance and capable of achieving low thermal dependence and an adhesive capable of forming the adhesive tape.

### Solution to Problem

The present invention provides a silicone-based adhesive,
having an initial adhesive force of 0.2 to 3 N/20 mm, and
having an adhesive force of 4 N/20 mm or less after heating at 260°C for 30 minutes, where
each of the adhesive forces is defined as a peel adhesive force determined by subjecting a single-sided adhesive tape to "180° peel adhesive force test for stainless steel test plate" defined in Japanese Industrial Standards (hereinafter referred to as "JIS") Z 0237: 2009, the single-sided adhesive tape including an adhesive layer formed of the silicone-based adhesive.

In another aspect, the present invention provides an adhesive tape including a cured layer of the above silicone-based adhesive of the present invention.

### Advantageous Effects of Invention

The adhesive of the present invention having the initial adhesive force in the given range ensures adhesion performance exhibited by an adhesive tape peeled off from a release liner, the adhesion performance being exhibited on an object. Moreover, a silicone-based adhesive is chosen as the adhesive of the present invention, and the adhesive force of the adhesive of the present invention after the heating, which is assumed to be a high-temperature treatment, at 260°C for 30 minutes is equal to or lower than the given value. Silicone-based adhesives can improve heat resistance compared to other types of adhesives such as acrylic adhesives and rubber-based adhesives. However, the adhesive forces of conventional silicone-based adhesives tend to greatly increase by the above heating. On the other hand, in the adhesive of the present invention, an increase in adhesive force by the above heating is reduced. Therefore, the present invention can provide an adhesive tape capable of showing high adhesion performance and capable of achieving low thermal dependence and an adhesive capable of forming the adhesive tape.

### BRIEF DESCRIPTION OF DRAWINGS

FIG. 1 is a cross-sectional view schematically showing an example of an adhesive tape of the present invention.
FIG. 2 is a cross-sectional view schematically showing another example of the adhesive tape of the present invention.

### DESCRIPTION OF EMBODIMENTS

Embodiments of the present invention will be described with reference to the drawings. The present invention is not limited to the following embodiments.

### [Initial adhesive force]

An adhesive (hereinafter referred to as "adhesive A") of the present embodiment has an adhesive force in an initial state (hereinafter referred to as "initial adhesive force") of 0.2 to 3 N/20 mm. When the initial adhesive force is less than 0.2 N/20 mm, it is difficult to ensure adhesion performance exhibited on objects. Lack of adhesion performance is noticeable particularly when the area of a processed tape product is small. When the initial adhesive force exceeds 3 N/20 mm, the adhesive force after the heating at 260°C for 30 minutes corresponding to a high-temperature treatment such as reflow soldering tends to greatly increase depending on specific composition of the adhesive A. Furthermore, the initial adhesive force exceeding 3 N/20 mm decreases handleability of a processed tape product particularly when the area of the processed tape product is small or when the processed tape product peeled off from a release liner is, for example, conveyed by suction and/or adhered to an object by suction. The lower limit of the initial adhesive force may be 0.4 N/20 mm or more, 0.5 N/20 mm or more, 0.7 N/20 mm or more, 1.0 N/20 mm or more, 1.1 N/20 mm or more, 1.3 N/20 mm or more, 1.4 N/20 mm or more, or even 1.5 N/20 mm or more. The upper limit of the initial adhesive force may be 2.8 N/20 mm or less, 2.7 N/20 mm or less, 2.5 N/20 mm or less, 2.4 N/20 mm or less, 2.2 N/20 mm or less, or even 2.0 N/20 mm or less. The term "initial adhesive force" means an adhesive force of an adhesive that has been cured but has not been heated at 200°C or higher and that has not been adhered to an object. The adhesive A is generally cured at 100 to 150°C.

The initial adhesive force is defined as a peel adhesive force determined by subjecting a single-sided adhesive tape to "180° peel adhesive force test for stainless steel test plate" (Item 10, particularly 10.4.1) defined in JIS Z 0237: 2009, the single-sided adhesive tape including an adhesive layer formed of the above adhesive. In this test, the adhesive layer has a thickness of 20 µm, and a substrate of the single-sided adhesive tape to be used in the evaluation is a polyimide (PI) film having a thickness of 25 µm. A stainless steel plate having a surface to which the single-sided adhesive tape is to be joined is used as a test plate, the surface having been ground with # (grit size) 360 sandpaper in one direction. The grinding direction is the direction of peeling in the test. The initial adhesive force test is performed after the single-sided adhesive tape and the test plate are joined together and left in an environment at 25°C for 20 to 40 minutes to stabilize the join between the single-sided adhesive tape and the test plate. The single-sided adhesive tape and the test plate are joined together by moving a manual roller having a mass of 2 kg and defined in JIS Z 0237: 2009 back and forth once.

The adhesive A has an adhesive force (hereinafter referred to as "post-heating adhesive force") of 4 N/20 mm or less after heating at 260°C for 30 minutes, and an increase in adhesive force by the above heating is reduced. When the post-heating adhesive force is 4 N/20 mm or less, an effect, such as easier removal of an adhesive tape or a processed tape product from an object after the heating, can be achieved. The upper limit of the post-heating adhesive force may be 3.8 N/20 mm or less, 3.5 N/20 mm or less, 3.3 N/20 mm or less, 3.0 N/20 mm or less, 2.8 N/20 mm or less, 2.5 N/20 mm or less, 2.3 N/20 mm or less, 2.0 N/20 mm or less, or even 1.8 N/20 mm or less. The lower limit of the post-heating adhesive force is, for example, 0.2 N/20 mm or more, and may be 0.3 N/20 mm or more, 0.4 N/20 mm or more, 0.5 N/20 mm or more, 0.8 N/20 mm or more, or even 0.9 N/20 mm or more.

The post-heating adhesive force is defined as a peel adhesive force determined by subjecting a single-sided adhesive tape to "180° peel adhesive force test for stainless steel test plate" (Item 10, particularly 10.4.1) defined in JIS Z 0237: 2009, the single-sided adhesive tape including an adhesive layer formed of the adhesive, the single-sided adhesive tape having undergone heating at 260°C for 30 minutes. Evaluation of the post-heating adhesive force is performed in the same manner as in the evaluation of the initial adhesive force, except that a single-sided adhesive tape having undergone the heating at 260°C for 30 minutes and subsequently been left at 25°C for 2 hours or more is used.

For the adhesive A, a difference (= post-heating adhesive force - initial adhesive force) between the post-heating adhesive force and the initial adhesive force is, for example, 1.2 N/20 mm or less, and may be 1.1 N/20 mm or less, 1.0 N/20 mm or less, 0.9 N/20 mm or less, 0.8 N/20 mm or less, 0.7 N/20 mm or less, 0.6 N/20 mm or less, 0.5 N/20 mm or less, 0.4 N/20 mm or less, or even 0.3 N/20 mm or less. The lower limit of the difference is, for example, more than 0 N/20 mm, and may be 0.05 N/20 mm or more or even 0.1 N/20 mm or more.

The adhesive A may have one of the following properties or any combination of two or more of the following properties.

The adhesive A may have a holding power (hereinafter referred to as "high-temperature holding power") of 0.2 mm or less at 260°C. The high-temperature holding power is defined as a distance of a displacement determined after a test time of 30 minutes, the distance being evaluated by subjecting a single-sided adhesive tape to a holding power test defined in JIS Z 0237: 2009 at a test temperature of 260°C, the single-sided adhesive tape including an adhesive layer formed of the above adhesive. In the holding power test, dimensions of an adhered portion are 10 mm in width and 20 mm in length, and a 200 g weight is used. A stainless steel plate having a surface to which the single-sided adhesive tape is to be joined is used as a test plate, the surface having been ground with # (grit size) 360 sandpaper in one direction. The grinding direction is the direction of the above displacement. The high-temperature holding power test is performed after the single-sided adhesive tape and the test plate are joined together and left in an environment at 25°C for 20 to 40 minutes to stabilize the join between the single-sided adhesive tape and the test plate. The single-sided adhesive tape and the test plate are joined together by moving a manual roller having a mass of 2 kg and defined in JIS Z 0237: 2009 back and forth once. The high-temperature holding power may be 0.15 mm or less, 0.1 mm or less, 0.08 mm or less, 0.07 mm or less, 0.06 mm or less, 0.05 mm or less, 0.04 mm or less, 0.03 mm or less, or even 0.02 mm or less. The lower limit of the high-temperature holding power is, for example, 0.01 mm or more. When the high-temperature holding power is in the above range, it is possible to reduce deformation and variation of the adhesion performance of an adhesive tape or a processed tape product, particularly a processed tape product having a small area, under a high temperature environment. In the case of a common adhesive, the higher the post-heating adhesive force is, the more likely the high-temperature holding power is to be high. On the other hand, in the case of the adhesive A, a favorable high-temperature holding power can be achieved while an increase in post-heating adhesive force is reduced. In the above test, the adhesive layer has a thickness of 20 µm, and a substrate of the single-sided adhesive tape to be used in the evaluation is a PI film having a thickness of 25 µm.

A peel force (hereinafter referred to as "peel force") of the adhesive A may be 0.04 to 1.5 N/50 mm, the peel force being required for peeling off from a release liner. When the peel force is in the above range, shape processability of an adhesive tape including a release liner and releasability of a processed tape product from a release liner can be improved. Too low a peel force can cause, in shape processing of an adhesive tape including a release liner, a defect such as separation of an adhesive layer and the release liner by a processing blade pressed against the adhesive tape. Too high a peel force can make it difficult, for example, to peel a processed tape product (which may be a product resulting from shape processing of an adhesive tape including a release liner) off from a release liner particularly when the area of the processed tape product is small. The upper limit of the peel force may be 1.3 N/50 mm or less, 1.0 N/50 mm or less, 0.8 N/50 mm or less, 0.5 N/50 mm or less, 0.3 N/50 mm or less, 0.2 N/50 mm or less, 0.18 N/50 mm or less, 0.15 N/50 mm or less, 0.13 N/50 mm or less, 0.12 N/50 mm or less, or even 0.1 N/50 mm or less. The lower limit of the peel force may be 0.05 N/50 mm or more, 0.06 N/50 mm or more, 0.07 N/50 mm or more, 0.08 N/50 mm or more, 0.09 N/50 mm or more, or even 0.1 N/50 mm or more.

The peel force is defined as a peel force determined by subjecting a single-sided adhesive tape to "180° peel force test for release liner" (Item 10, particularly 10.4.4) defined in JIS Z 0237: 2009, the single-sided adhesive tape including a substrate, an adhesive layer formed of the above adhesive, and a release liner having a release treatment surface treated with fluorosilicone, the release treatment surface being a joining surface joined to the adhesive layer. A member to be peeled off at 180° is, contrary to what is defined in the above standard, not the release liner, but the substrate and the adhesive layer. In this test, the adhesive layer has a thickness of 20 µm, the substrate is a PI film having a thickness of 25 µm, and the release liner is a polyethylene terephthalate (PET) film having a thickness of 20 to 100 µm. The peel force test is performed after the adhesive layer and the release liner are joined together and the single-sided adhesive tape is left in an environment at 25°C for at least 24 hours to stabilize the join between the adhesive tape and the release liner. The adhesive layer and the release liner are joined together by moving a manual roller having a mass of 2 kg and defined in JIS Z 0237: 2009 back and forth once. Examples of the fluorosilicone include organopolysiloxanes having a fluorine-containing organic group and an alkenyl group, organohydrogen siloxane crosslinking agents, and release coating compositions including a platinum-including catalyst. Other examples of the fluorosilicone include organopolysiloxanes having a fluorine-containing organic group and a silicone-bonded hydrogen group, alkenyl functional organopolysiloxanes, and release coating compositions including a platinum-including catalyst. The release liner may be a commercially-available product.

A peel force (hereinafter referred to as "post-storage peel force") of the adhesive A after storage may be 0.04 to 2.0 N/50 mm. The post-storage peel force is defined as a peel force determined by subjecting a single-sided adhesive tape as described above to the above 180° peel force test after maintenance at 60°C for one week, the single-sided adhesive tape including the release liner. The maintenance at 60°C for one week corresponds to accelerated testing which is assumed to be a long-term storage. The upper limit of the post-storage peel force may be 1.8 N/50 mm or less, 1.5 N/50 mm or less, 1.3 N/50 mm or less, 1 N/50 mm or less, 0.8 N/50 mm or less, 0.5 N/50 mm or less, 0.45 N/50 mm or less, or even 0.4 N/50 mm or less. The lower limit of the post-storage peel force may be 0.05 N/50 mm or more, 0.06 N/50 mm or more, 0.07 N/50 mm or more, 0.08 N/50 mm or more, 0.09 N/50 mm or more, or even 0.1 N/50 mm or more. When the post-storage peel force is in the above range, the shape processability of an adhesive tape and the releasability of a processed tape product from a release liner can be improved even after a long-term storage.

A gel fraction of the adhesive A is, for example, 45 to 80 weight%, and may be 49 to 77 weight% or even 49 to 70 weight%. When the gel fraction is in the above range, displacement and peeling of an adhesive tape or a processed tape product, particularly a processed tape product having a small area, from a surface where the adhesive tape or the processed tape product is adhered are reduced under a high temperature environment and an increase in the post-heating adhesive force of the adhesive A is reduced.

The gel fraction can be determined by the following method. About 0.1 g of the adhesive to be evaluated is wrapped in a stretched porous polytetrafluoroethylene (PTFE) membrane (for example, NTF1122 manufactured by Nitto Denko Corporation) having an average pore diameter of 0.2 µm, and the wrapped adhesive is bound with a kite string to obtain a measurement sample. Next, the weight (pre-immersion weight C) of the measurement sample is measured. The pre-immersion weight C corresponds to the total weight of the test specimen, the stretched porous PTFE membrane, and the kite string. Separately, a wrapping weight B which is the total weight of the stretched porous PTFE membrane and the kite string is measured. The measurement sample is placed in a container filled with toluene and having an inner capacity of 50 mL and is allowed to stand still at 23°C for 7 days. Thereafter, the inside of the container is washed with toluene together with the measurement sample. The measurement sample is then taken out, transferred into an aluminum cup, and dried at 130°C for 2 hours to remove toluene. Then, the weight (post-immersion weight A) of the measurement sample is measured. The gel fraction can be determined by the following equation: gel fraction (weight%) = (post-immersion weight A - wrapping weight B)/(pre-immersion weight C - wrapping weight B) × 100. The weights are measured in an environment at a temperature of 25°C±5°C and a relative humidity of 50±5%.

The adhesive A may be of addition-curable type. The adhesive A of addition-curable type includes an addition-curable silicone adhesive as a main component. The term "main component" herein refers to a component whose content is highest. The content of the main component is, for example, 50 weight% or more, and may be 60 weight% or more, 70 weight% or more, 80 weight% or more, 90 weight% or more, 95 weight% or more, or even 99 weight% or more. The adhesive A may consist of an addition-curable silicone adhesive.

The adhesive A preferably includes no peroxide-curable silicone adhesive. It is difficult to obtain the above properties using a peroxide-curable silicone adhesive, and, particularly, an increase in post-heating adhesive force and a decrease in high-temperature holding power are likely to happen. It is inferred that the increase and the decrease are due to different states of distribution of crosslinking points, the different states being attributed to different reaction mechanisms. In the addition-curable type, addition reaction groups that can serve as crosslinking points are uniformly present in a composition, and three-dimensional crosslinking by a hydrosilane compound having a lot of crosslinking points progresses; therefore, the distribution of crosslinking points in the cured adhesive layer is relatively uniform. On the other hand, in the peroxide-curable type, a reaction progresses in which, among a plurality of functional groups that a silicone molecule can have, a functional group with a randomly and competitively generated radical serves as a crosslinking point; therefore, the positions and the number of crosslinking points differ from one silicone molecule to another and thus crosslinking points are more randomly distributed in the cured adhesive layer. It is inferred that these different states of distribution result in the difference in properties.

The adhesive A is, for example, an adhesive composition including a silicone compound (component A) having an addition reaction group, a silicone resin (component B), a hydrosilane compound (component C), and a catalyst (component D).

Examples of the silicone compound (component A) having an addition reaction group include organopolysiloxanes having an addition reaction group and partial condensates thereof. The organopolysiloxane may be any of monoorganopolysiloxane, diorganopolysiloxane, and triorganopolysiloxane, and is preferably at least one selected from the group consisting of monoorganopolysiloxane and diorganopolysiloxane, and more preferably diorganopolysiloxane. An organo group in the organopolysiloxane is, for example, a hydrocarbon group having 1 to 8 carbon atoms, preferably a hydrocarbon group having 1 to 4 carbon atoms, and more preferably an alkyl group (may be linear or branched) having 1 to 4 carbon atoms. A typical example of the organo group is a methyl group. One or some of the organo groups may be substituted by a hydroxy group. Examples of the addition reaction group include a monovalent organic group containing an alkenyl group, typical examples of the addition reaction group include a vinyl group and an allyl group, and the addition reaction group is preferably a vinyl group. The addition reaction group is generally present at at least one terminal of a molecule of the component A, and may be present at both terminals thereof. Specific examples of the component A include vinyldimethylpolysiloxane, vinyldiethylpolysiloxane, vinylisopropylpolysiloxane, and vinylphenylmethylsiloxane. The amount of the addition reaction group in the component A is, for example, 0.0005 mol or more and 0.5 mol or less per 100 g of the silicone compound. The component A generally does not have a Q unit (SiO₂) and a Si-H group.

The weight-average molecular weight of the component A is, for example, 100,000 to 1,000,000 and may be 100,000 to 500,000. The component A may be an oily component or a raw-rubber-like component (silicone rubber).

The content of the component A in the adhesive A is, for example, 20 to 80 weight% and may be 30 to 70 weight%.

The adhesive A may include two or more components A.

Examples of the silicone resin (component B) include: organopolysiloxanes having the Q unit and at least one unit selected from the group consisting of an M unit (R₃SiO_{1/2}), a D unit (FbSiO), and a T unit (RSiO_{3/2}); and partial condensates thereof. The symbol Rs in the M unit, the D unit, and the T unit are, for example, each independently a hydrocarbon group having 1 to 8 carbon atoms, preferably a hydrocarbon group having 1 to 4 carbon atoms, and more preferably an alkyl group (which may be linear or branched) having 1 to 4 carbon atoms. A typical example of R is a methyl group. One or some of Rs may be substituted by a hydroxy group. The component B generally does not have an addition reaction group. The component B is preferably, what is called, an MQ resin formed of the M unit and the Q unit. The symbol R in the M unit of the MQ resin may be a methyl group.

A content ratio (molar ratio) between the M unit and the Q unit in the MQ resin is, for example, 0.3:1 to 1.5:1 and may be 0.5:1 to 1.3:1, as expressed as "M unit:Q unit".

The weight-average molecular weight of the component B is, for example, 1,000 to 10,000 and may be 3,000 to 8,000.

The content of the component B in the adhesive A is, for example, 20 to 80 weight% and may be 30 to 70 weight%.

The adhesive A may include two or more components B.

A mix ratio (mass ratio) between the component A and the component B in the adhesive A is, for example, 20:80 to 80:20 and may be 25:75 to 50:50, as expressed as "component A:component B".

The hydrosilane compound (component C) is a Si-H group-containing component that reacts with the addition reaction group of the component A to form a crosslinked structure. Examples of the component C include hydrogen organopolysiloxanes and partial condensates thereof. The hydrogen organopolysiloxane may be hydrogen monoorganopolysiloxane and/or hydrogen diorganopolysiloxane. Examples of an organo group are the same as the examples of the organo group of the component A, including the preferable embodiments. One or some of the organo groups may be substituted by a hydroxy group. Specific examples of the component C include hydrogen monomethylpolysiloxane and hydrogen dimethylpolysiloxane, and the component C may be a copolymer of hydrogen monomethylsiloxane and hydrogen dimethylsiloxane.

The weight-average molecular weight of the component C is, for example, 100 to 10,000 and may be 100 to 1,000. The component C may be an oily component or a raw-rubber-like component (silicone rubber).

The component C is preferably added to the adhesive A so that a molar ratio of the Si-H group in the component C to the addition reaction group, such as a monovalent organic group having an alkenyl group, included in the adhesive A is, for example, 0.5 to 20, particularly 0.8 to 15.

The adhesive A may include two or more components C.

The catalyst (component D) is a component accelerating a curing reaction of the adhesive A. The catalyst is typically a catalyst including a platinum group element and is preferably a platinum-based catalyst. The platinum group element included in the component D generally stays in the adhesive layer being a cured layer of the adhesive A.

The content of the component D in the adhesive A is, for example, 5 to 500 ppm (on a weight basis; the same applies hereinafter) and may be 10 to 200 ppm.

The adhesive A may include an additional component other than those described above as long as the effect of the present invention is achieved. Examples of the additional component include a silicone compound other than the component A, the component B, and the component C, a reaction-controlling agent, an antioxidant, and a ultraviolet absorber.

The adhesive A may be manufactured by blending two or more commercially-available silicone-based adhesives. For example, one or more adhesives having strong adhesiveness and one or more adhesives having weak adhesiveness may be blended. The adhesive having strong adhesiveness herein refers to an adhesive having an initial adhesive force of 1 N/20 mm or more, preferably 1.5 N/20 mm or more. The initial adhesive force of the adhesive having strong adhesiveness may be 2 N/20 mm or more, 2.5 N/20 mm or more, or even 3 N/20 mm or more. The upper limit of the initial adhesive force is, for example, 6 N/20 mm or less, and may be 5.8 N/20 mm or less or even 5 N/20 mm or less. Meanwhile, the adhesive having weak adhesiveness refers to an adhesive having an initial adhesive force of less than 1 N/20 mm, preferably 0.8 N/20 mm or less, more preferably 0.7 N/20 mm or less. The initial adhesive force of the adhesive having weak adhesiveness may be 0.5 N/20 mm or less, 0.3 N/20 mm or less, 0.2 N/20 mm or less, or even less than 0.2 N/20 mm. The lower limit of the initial adhesive force is, for example, 0.05 N/20 mm or more, and may be 0.1 N/20 mm or more. However, the method for manufacturing the adhesive A is not limited to the above example.

In the above aspect, the present invention provides a manufacturing method of a silicone-based adhesive, the method including obtaining the adhesive A by mixing one or more silicone-based adhesives having strong adhesiveness and one or more silicone-based adhesives having weak adhesiveness.

### [Adhesive tape]

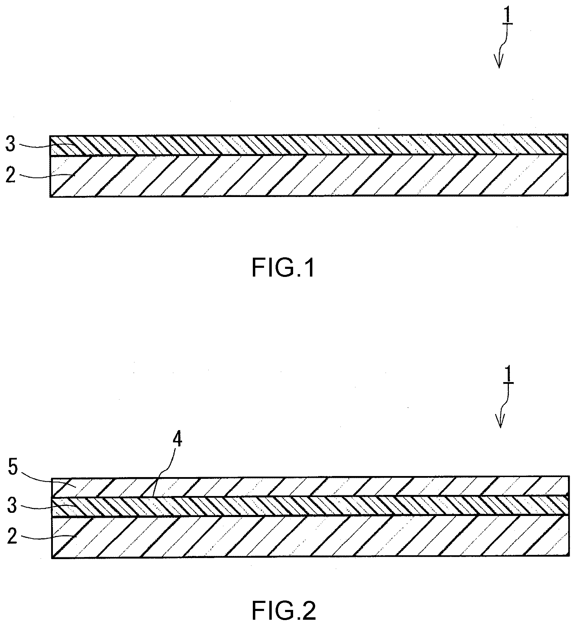

FIG. 1 shows an example of an adhesive tape of the present embodiment. An adhesive tape 1 of FIG. 1 includes a substrate 2 and an adhesive layer 3 provided on a surface of the substrate 2. The adhesive layer 3 may be a cured layer of the adhesive A.

The thickness of the adhesive layer 3 is, for example, 5 to 200 µm, and may be 10 to 100 µm.

Examples of the material of the substrate 2 include paper, a metal, a resin, and a composite material thereof. Examples of the metal include aluminum and stainless steel. Examples of the resin include polyolefins such as polyethylene and polypropylene, polyesters such as PET, silicone resins, polycarbonates, polyimides, polyamide-imides, polyphenylene sulfide, polyetheretherketone (PEEK), and fluorine resins. Examples of the fluorine resins include PTFE, tetrafluoroethylene-perfluoroalkyl vinyl ether copolymer (PFA), tetrafluoroethylene-hexafluoropropylene copolymer (FEP), and tetrafluoroethylene-ethylene copolymer (ETFE). Examples of the metal include stainless steel and aluminum. However, the material of the substrate 2 is not limited to the above examples. A substrate included in a known adhesive tape may be used as the substrate 2.

The substrate 2 may be a heat-resistant substrate including a heat-resistant material. In this case, the adhesive tape 1 having a high heat resistance can be obtained. Examples of the heat-resistant material include a metal and a heat-resistant resin. The heat-resistant resin typically has a melting point of 150°C or higher. The heat-resistant resin may have a melting point of 160°C or higher, 200°C or higher, 250°C or higher, 260°C or higher, or even 300°C or higher. Examples of the heat-resistant resin include a silicone resin, a polyimide, a polyamide-imide, polyphenylene sulfide, PEEK, and a fluorine resin.

The thickness of the substrate 2 is, for example, 1 to 200 µm.

The adhesive tape of the present embodiment is not limited to the above example as long as the adhesive tape of the present embodiment includes the cured layer of the adhesive A. The adhesive tape may be a tape, such as a substrate-less double-sided adhesive tape, not including the substrate 2.

The adhesive tape of the present embodiment may include an additional member and/or an additional layer other than the above substrate 2 and the above adhesive layer 3. Examples of the additional member include a release liner. FIG. 2 shows an example of the adhesive tape further including a release liner. The adhesive tape 1 of FIG. 2 has the same structure as the adhesive tape 1 of FIG. 1, except that the adhesive tape 1 of FIG. 2 further includes a release liner 5 joined to an adhesive surface 4 of the adhesive layer 3. The release liner 5 serves to protect the adhesive surface of the adhesive layer 3. The release liner 5 can be removed when the adhesive tape 1 or a processed tape product obtained by shape processing of the adhesive tape 1 is used, for example, when the adhesive tape 1 or the processed tape product is adhered to an object. The release liner 5 may remain joined to the adhesive layer 3 at the time of shape processing of the adhesive tape 1.

Examples of the material of the release liner 5 are the same as the examples of the material of the substrate 2. However, the release liner 5 may not be a heat-resistant substrate including a heat-resistant material.

A joining surface of the release liner 5 may be subjected to a release treatment, the joining surface being joined to the adhesive layer 3. The release treatment can be performed, for example, using fluorosilicone. Examples of the fluorosilicone are as described above.

The adhesive tape 1 may be in a sheet shape or a strip shape. The adhesive tape 1 in a sheet shape may be, for example, a polygon such as a square or a rectangle, a circle, or an ellipse. The adhesive tape 1 in a strip shape may be a wound body wound around a winding core.

The adhesive tape 1 of FIG. 1 and that of FIG. 2 are each a single-sided adhesive tape. The adhesive tape of the present embodiment is not limited to the above examples, and may be, for example, a double-sided adhesive tape. The double-sided adhesive tape includes, for example, the substrate 2 and two adhesive layers each provided on a surface of the substrate. At least one of the adhesive layers is a cured layer of the adhesive A, or each of the adhesive layers may be a cured layer of the adhesive A. The double-sided adhesive tape may further include the release liner 5 joined to an adhesive surface of at least one of the adhesive layers. The double-sided adhesive tape may be a substrate-less tape.

The adhesive tape 1 may be formed into, for example, a processed tape product by shape processing. The processed tape product resulting from the shape processing of the adhesive tape 1 including the release liner 5 may be distributed with the release liner 5 disposed thereon. The processed tape product may be, for example, a product having as small an area as 125 mm² or less. The adhesive tape 1 and a shape-processed product obtained by shape processing of the adhesive tape 1 may be subjected to a high-temperature treatment such as reflow soldering after adhered to an object. The temperature set in the high-temperature treatment is, for example, 200°C or higher, and may be 220°C or higher, 240°C or higher, or even 260°C or higher. The reflow soldering is generally performed at about 260°C. However, the application of the adhesive tape 1 is not limited to the above example.

### EXAMPLES

Hereinafter, the present invention will be described more specifically by way of examples. The present invention is not limited to examples shown below.

First, methods for evaluation of adhesives will be described.

### [Initial adhesive force and post-heating adhesive force]

An adhesive of each of Examples and Comparative Examples was applied onto a PI film (thickness: 25 µm) using an applicator. The PI film and the coating film formed of the adhesive as a whole were heated at 140°C for 3 minutes to cure the coating film. A single-sided adhesive tape for evaluation was produced in this manner, the single-sided adhesive tape including a PI substrate and an adhesive layer (thickness: 20 µm) provided on a surface of the substrate. Next, a 180° peel adhesive force of the produced single-sided adhesive tape was evaluated by the above method, and was defined as the initial adhesive force of the adhesive. Separately, a single-sided adhesive tape produced in the same manner was subjected to a heating treatment in which the single-sided adhesive tape was placed in a heating furnace at 260°C and heated for 30 minutes. The 180° peel adhesive force of the single-sided adhesive tape subjected to the heating treatment was evaluated by the above method, and was defined as the post-heating adhesive force of the adhesive. Each test was performed after the single-sided adhesive tape and a test plate were joined together and left in an environment at 25°C for 30 minutes. The temperature of an environment in which each 180° peel adhesive force was measured was 25°C, and the relative humidity of the environment was 50%.

### [Peel force]

An adhesive of each of Examples and Comparative Examples was applied onto a PI film (thickness: 25 µm) using an applicator. The PI film and the coating film formed of the adhesive as a whole were heated at 140°C for 3 minutes to cure the coating film. A single-sided adhesive tape for evaluation was produced in this manner, the single-sided adhesive tape including a PI substrate and an adhesive layer (thickness: 20 µm) provided on a surface of the substrate. Next, a release liner was joined to the adhesive layer of the produced single-sided adhesive tape, and a manual roller having a mass of 2 kg and defined in JIS Z 0237: 2009 was moved back and forth once. After that, the single-sided adhesive tape and the release liner were left at 25°C for 24 hours to stabilize the join of the adhesive layer and the release liner. As the release liner was used a commercially-available PET film (PET38-SK1 U manufactured by FUJIKO Co., Ltd. and having a thickness of 38 µm) having a joining surface subjected to a release treatment with fluorosilicone and joined to the adhesive layer. The 180° peel force of the release-liner-attached single-sided adhesive tape thus produced was evaluated by the above method, and was defined as the peel force of the adhesive. The temperature of an environment in which the 180° peel force was measured was 25°C, and the relative humidity of the environment was 50%.

### [Post-storage peel force]

A release-liner-attached single-sided adhesive tape as produced for evaluation of the peel force was stored at 60°C for one week. The 180° peel force of the single-sided adhesive tape after the storage was evaluated by the above method, and was defined as the post-storage peel force of the adhesive.

### [High-temperature holding power]

The high-temperature holding power of each adhesive was determined by the above method as a distance of a displacement determined after a test time of 30 minutes. The test was performed after the single-sided adhesive tape and a test plate were joined together and left in an environment at 25°C for 30 minutes. The temperature of an environment in which the high-temperature holding power was measured was 25°C, and the relative humidity of the environment was 50%.

### [Gel fraction]

The gel fraction of the adhesive was determined by the above method. The temperature of an environment in which the weight was measured was 25°C, and the relative humidity of the environment was 50%.

### (Example 1)

An amount of 75 parts by weight of an addition-curable silicone adhesive A (SD4560 manufactured by Dow Toray Co., Ltd.), 25 parts by weight of an addition-curable silicone adhesive B (KR3704 manufactured by Shin-Etsu Chemical Co., Ltd.), and 0.05 parts by weight of a platinum catalyst (CAT-PL-50T manufactured by Shin-Etsu Chemical Co., Ltd.) were mixed to obtain an adhesive of Example 1. The weights of the silicone adhesive and the platinum catalyst as expressed in parts by weight are each based on the weight of solids (the same applies to Examples and Comparative Examples below).

### (Example 2)

An amount of 50 parts by weight of the adhesive A, 50 parts by weight of the adhesive B, and 0.05 parts by weight of the above platinum catalyst were mixed to obtain an adhesive of Example 2.

### (Comparative Example 1)

An amount of 100 parts by weight of the adhesive A and 0.05 parts by weight of the above platinum catalyst were mixed to obtain an adhesive of Comparative Example 1.

### (Comparative Example 2)

An amount of 100 parts by weight of the adhesive B and 0.05 parts by weight of the above platinum catalyst were mixed to obtain an adhesive of Comparative Example 2.

### (Example 3)

An amount of 75 parts by weight of an addition-curable adhesive C (SD4580 manufactured by Dow Toray Co., Ltd.), 25 parts by weight of the addition-curable silicone adhesive B (KR3704 manufactured by Shin-Etsu Chemical Co., Ltd.), and 0.05 parts by weight of the platinum catalyst (CAT-PL-50T manufactured by Shin-Etsu Chemical Co., Ltd.) were mixed to obtain an adhesive of Example 3.

### (Example 4)

An amount of 50 parts by weight of the adhesive C, 50 parts by weight of the adhesive B, and 0.05 parts by weight of the above platinum catalyst were mixed to obtain an adhesive of Example 4.

### (Comparative Example 3)

An amount of 100 parts by weight of the adhesive C and 0.05 parts by weight of the above platinum catalyst were mixed to obtain an adhesive of Comparative Example 3.

### (Example 5)

An amount of 75 parts by weight of an addition-curable adhesive D (SD4584 manufactured by Dow Toray Co., Ltd.), 25 parts by weight of the addition-curable silicone adhesive B (KR3704 manufactured by Shin-Etsu Chemical Co., Ltd.), and 0.05 parts by weight of the platinum catalyst (CAT-PL-50T manufactured by Shin-Etsu Chemical Co., Ltd.) were mixed to obtain an adhesive of Example 5.

### (Example 6)

An amount of 50 parts by weight of the adhesive D, 50 parts by weight of the adhesive B, and 0.05 parts by weight of the above platinum catalyst were mixed to obtain an adhesive of Example 6.

### (Comparative Example 4)

An amount of 100 parts by weight of the adhesive D and 0.05 parts by weight of the above platinum catalyst were mixed to obtain an adhesive of Comparative Example 4.

### (Example 7)

An amount of 90 parts by weight of the addition-curable silicone adhesive C (SD4580 manufactured by Dow Toray Co., Ltd.), 10 parts by weight of an addition-curable silicone adhesive E (X-40-3306 manufactured by Shin-Etsu Chemical Co., Ltd.), and 0.05 parts by weight of the platinum catalyst (CAT-PL-50T manufactured by Shin-Etsu Chemical Co., Ltd.) were mixed to obtain an adhesive of Example 7.

### (Example 8)

An amount of 75 parts by weight of the adhesive C, 25 parts by weight of the adhesive E, and 0.05 parts by weight of the above platinum catalyst were mixed to obtain an adhesive of Example 8.

Tables 1 and 2 show the composition and properties of each adhesive.

**[Table 1]**

| | Comparative Example 1 | Example 1 | Example 2 | Comparative Example 2 | Comparative Example 3 | Example 3 | Example 4 |
|---|---|---|---|---|---|---|---|
| Mixed types | Adhesive A + Adhesive B | | | | Adhesive C + Adhesive B | | |
| Mixing ratio (parts by weight) | 100/0 | 75/25 | 50/50 | 0/100 | 10010 | 75/25 | 50/50 |
| Initial adhesive force (N/20 mm) | 1.5 | 1.1 | 0.2 | 0.1 | 3.0 | 1.6 | 0.4 |
| Post-heating adhesive force (N/20 mm) | 4.7 | 1.8 | 0.9 | 1.3 | 4.1 | 2.5 | 1.1 |
| Peel force (N/50 mm) | 0.07 | 0.07 | 0.06 | 0.07 | 0.09 | 0.12 | 0.07 |
| Post-storage peel force (N/50 mm) | 0.04 | 0.05 | 0.10 | 0.07 | 0.10 | 0.24 | 0.10 |
| High-temperature holding power (mm) | 0.01 | 0.05 | 0.05 | 0.02 | 0.06 | 0.05 | 0.02 |
| Gel fraction (weight%) | 45 | 56 | 67 | 90 | 44 | 55 | 67 |

**[Table 2]**

| | Comparative Example 4 | Example 5 | Example 6 | Example 7 | Example 8 |
|---|---|---|---|---|---|
| Mixed types | Adhesive D + Adhesive B | | | Adhesive C + Adhesive E | |
| Mixing ratio (parts by weight) | 10010 | 75/25 | 50/50 | 90/10 | 75/25 |
| Initial adhesive force (N/20 mm) | 5.8 | 2.4 | 0.7 | 2.7 | 1.4 |
| Post-heating adhesive force (N/20 mm) | 7.6 | 3.3 | 1.7 | 3.0 | 1.5 |
| Peel force (N/50mm) | 0.05 | 0.20 | 0.07 | 0.18 | 0.10 |
| Post-storage peel force (N/50mm) | 0.08 | 0.28 | 0.11 | 0.37 | 0.15 |
| High-temperature holding power (mm) | 0.03 | 0.03 | 0.02 | 0.03 | 0.03 |
| Gel fraction (weight%) | 37 | 49 | 63 | 49 | 57 |

### (Comparative Example 5)

A peroxide-curable silicone adhesive (SH4280 manufactured by Dow Toray Co., Ltd.; the amount of peroxide: 1.3 parts by weight) was used as an adhesive of Comparative Example 10. The initial adhesive force of the adhesive was 4.2 N/20 mm, the post-heating adhesive force thereof was 9.0 N/20 mm, the peel force thereof was 0.2 N/50 mm, the post-storage peel force thereof was 0.42 N/50 mm, the high-temperature holding power thereof was unable to be measured because the test specimen dropped during the test due to the load applied by the weight, and the gel fraction thereof was 40%.

### INDUSTRIAL APPLICABILITY

The silicone-based adhesive of the present invention can be used in the same applications as conventional adhesives. One of the applications is, for example, an adhesive tape.

## Claims

1. A silicone-based adhesive,
having an initial adhesive force of 0.2 to 3 N/20 mm, and
having an adhesive force of 4 N/20 mm or less after heating at 260°C for 30 minutes, where
each of the adhesive forces is defined as a peel adhesive force determined by subjecting a single-sided adhesive tape to "180° peel adhesive force test for stainless steel test plate" defined in JIS Z 0237: 2009, the single-sided adhesive tape including an adhesive layer formed of the silicone-based adhesive.

2. The silicone-based adhesive according to claim 1,
having a holding power of 0.2 mm or less at 260°C, where
the holding power is defined as a distance of a displacement determined after a test time of 30 minutes, the distance being evaluated by subjecting a single-sided adhesive tape to a holding power test defined in JIS Z 0237: 2009 at a test temperature of 260°C, the single-sided adhesive tape including an adhesive layer formed of the silicone-based adhesive, and
in the holding power test, dimensions of an adhered portion are 10 mm in width and 20 mm in length, and a 200 g weight is used.

3. The silicone-based adhesive according to claim 1 or 2, having a gel fraction of 45 to 80 weight%.

4. The silicone-based adhesive according to any one of claims 1 to 3, being of addition-curable type.

5. An adhesive tape comprising a cured layer of the silicone-based adhesive according to any one of claims 1 to 4.

6. The adhesive tape according to claim 5, further comprising a substrate, wherein the cured layer is provided on a surface of the substrate.
